# EUROPEAN PATENT SPECIFICATION

(11) **EP 2 663 067 B1**
(45) Date of publication and mention of the grant of the patent: **05.06.2019**
(21) Application number: 13164341.3
(22) Date of filing: 18.04.2013
(51) Int. Cl.: H04M 11/06, H04M 7/00, H04L 29/06, H04L 12/66

(54) **Home gateway with standby state support**
Home-Gateway mit Bereitschaftsstatus-Unterstützung
Passerelle domestique avec support d'état de veille

(30) Priority: 09.05.2012 EP 12305515
(43) Date of publication of application: 13.11.2013
(73) Proprietor: InterDigital CE Patent Holdings, 75017 Paris (FR)
(72) Inventor: Monsieux, Daniel, 1800 Vilvoorde (BE)
(74) Representative: Morain, David

(56) References cited:
- WO-A1-2011/066849
- US-A1- 2006 072 544
- US-A1- 2007 280 208
- AVM: "FRITZ!Box Fon WLAN 7270", FRITZ! - INSTALLATION, CONFIGURATION, AND OPERATION, , 1 August 2009 (2009-08-01), pages 1-193, XP002613582, Retrieved from the Internet: URL:http://avm.de/en/service/manuals/FRITZ Box/Manual_FRITZBox_Fon_WLAN_7270.pdf [retrieved on 2010-12-09]

## Description

The present invention relates to a home gateway with standby state support, and more specifically to a home gateway with standby state support, which has voice over IP capability. The invention further relates to a method for waking up such home gateway from standby.

In the frame of the "European Programme for Energy Efficiency in ICT" (ICT: Information and Communication Technology) a plurality of codes of conduct have already been adopted with the aim of reducing energy consumption. Though the codes of conduct are a voluntary commitment of individual companies, in general companies will strive to reach compliance with these codes of conduct.

While on the one hand the aim of reducing energy consumption of electric appliances deserves to be supported, on the other hand it puts a lot of burden on developers of such appliances.

For example, compliance with the EU Code of Conduct for Broadband Equipment requires that home gateways go to a low power state, and even to a standby state, in order to keep power consumption below tight limits. When the home gateway enters standby all extensions can be powered off. For a home gateway providing voice services (voice over IP) this means that also the connected phone is powered off.

Though the home gateway will generally resume its normal operation very fast when waking up from the standby state, one of the items that is not under control of the home gateway is the DSL Showtime (DSL: Digital Subscriber Line), i.e. the successful completion of the DSL link establishment process. This will usually require some 45 seconds to resume the service, inclusive login to the voice server. The user who requires voice service will hence not be able to use this service for a certain time. Up to the full resumption of the voice service the user who picked up the phone has either a dead line or a busy tone, and he may just finish the call, frustrated.

Document US-A-2007/280208 discloses a home gateway that exits power-saving mode upon detecting an off-hook event. The home gateway will then provide a dial tone to the phone via a SLIC.

Document US-A-2006/072544 discloses controlling call connection in internet protocol (IP) telephone in which a user is notified of an incoming call even if the terminal is in a stand-by state. Whenever an incoming call is detected, the user is informed via lamp or buzzer.

Document WO-A-2011/066849 discloses that during low power mode the home gateway still handles voice calls via a delegated service host.

It is an object of the present invention to propose a home gateway with voice service, which has an improved support for a standby state. It is a further object of the invention to propose a method for waking up such a home gateway from the the standby state.

The present invention is defined by independent claims 1 and 7 with particular embodiments being represented by the corresponding dependent claims.

An important aspect of the invention is that the user is informed, e.g. with a voice message via the telephone, that the voice service is not yet available and is being started when the user intends to place a telephone call. Of course, other types of messages may be used, e.g. a text message via a display of the telephone or a sound signal or a light signal via a sound source or a light source of the gateway, respectively.

The solution according to the invention has the advantage that the home gateway can be placed in complete standby state without fully losing the voice service. The loss of voice service is limited in time, depending on the sync speed a maximum of 1 to 2 minutes is to be expected. As the user is informed that the voice service is starting up again, he is aware of why he has no service yet and knows that there is no fault in the system. Hence the operator is able to provide a full service at a very low energy budget during standby. Only minor modification to the hardware of the gateway are necessary. One useful modification is to include a power supply for supplying a voltage to the connector for the telephone, which simplifies detection of the user's intention to place a telephone call.

The above method is initiated when the home gateway is in standby, i.e. when only DSL is active and no voice service is available, and the user picks up the connected phone. This incident is detected by the home gateway, preferably by simply detecting an unhooking of the telephone, which will then service the phone itself, i.e. the home gateway acts as a PBX (PBX: Private Branch Exchange) at that moment. At the same time the home gateway starts the registration of the voice service, which, however, takes some time. In the meantime a message is given to the user, e.g. a spoken message such as "a moment please, service is starting up...", or a text message on a display of the connected phone or another connected device. The message is repeated a couple of times until the voice service is registered. Once the registration of the voice service is completed an additional message is advantageously given, e.g. "Thank you for waiting, your call will now be transferred." This final message is especially useful if in the meantime the user has already dialed a number. Otherwise, the message can be "Thank you for waiting, you can dial now", and the normal dial tone is signaled.

Preferably, the processor is configured to wake up from a standby state in response to a signal from the detection circuit. This allows to also put the processor in standby, which further reduces the power consumption. Only the detection circuit needs to be active in standby.

For incoming calls during standby a distinction needs to be made between PSTN calls (PSTN: Public Switched Telephone Network) and VOIP calls. In case there is a PSTN call, this can be detected by hardware and the service can start up as fast as possible. As this is only a FXO-FXS call (FXO: Foreign eXchange Office; FXS: Foreign eXchange Station), it can be done very rapidly. In case there is a VOIP call, the home gateway is preferably informed using ATM (ATM: Asynchronous Transfer Mode).

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a method for sending a home gateway to standby;
- Fig. 2: schematically depicts a method according to the invention for waking up a home gateway from standby; and
- Fig. 3: schematically illustrates a home gateway according to the invention.

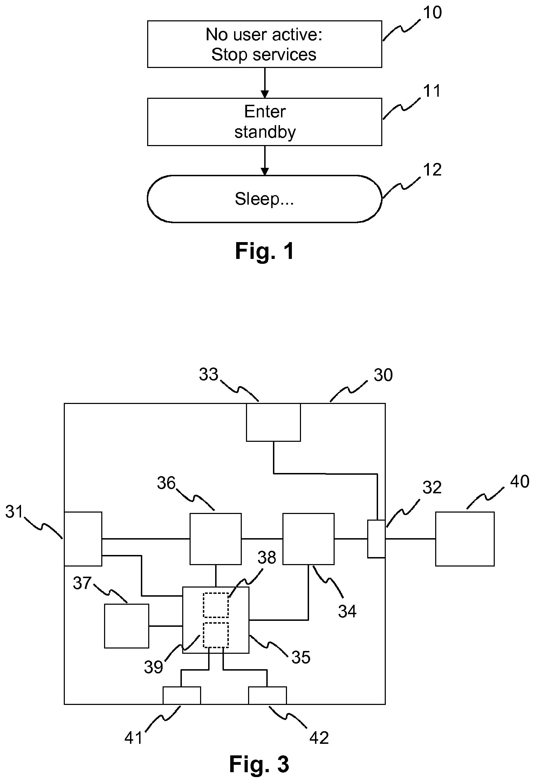

Fig. 1 schematically illustrates a method for sending a home gateway to standby. Once it is determined 10 that there is no active user, all services provided by the gateway are stopped, e.g. USB (USB: Universal Serial Bus), ETH (ETH: Ethernet), voice, WIFI, DSL, etc. The home gateway then enters 11 a networked standby mode and sleeps 12. The networked standby mode designates an operation state that maintains a certain level of network connectivity but deactivates main functions. At the same time this operation state ensures that the home gateway can be reactivated via a network. In the networked standby mode a power supply unit provides a voltage of -48V for a connected phone.

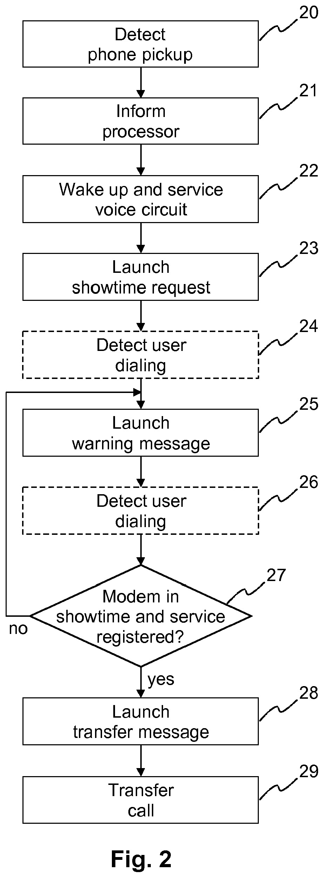

In order to wake up the home gateway from networked standby for a phone call, a method as described in Fig. 2 is performed. When an unhooking of the phone is detected 20, i.e. it is detected that the user picks up the connected phone, a detection circuit informs 21 the processor of the home gateway about this incident, e.g. via an interrupt. In response to the notification the gateway, i.e. its CPU (CPU: Central Processing Unit), wakes up 22 and services the voice circuit. The CPU advantageously focuses 100% on the voice service to make it work as soon as possible. For this purpose the gateway launches 23 a showtime request. In case the user already dials a number this dialing is detected 24. However, as the voice service is not yet available the gateway is aware that it cannot yet process the user input. Therefore, the gateway launches 25 a warning message to the user, such as "Dear user, your request has been noted, but for the moment the service is starting up. Please wait a moment... thank you for your patience." In case the user has not yet entered a number, he has the possibility to enter 26 a number after the message. The message is repeated until it is determined 27 that the gateway has showtime and has voice connection. In this case a new message is sent 28 to the user, for example "Thank you for waiting, your call will now be transferred." Subsequently, the call is transferred 29 to the voice mail server and normal operation is resumed. Of course, the message that the call will be transferred can also be omitted. In addition, the user may likewise dial the desired number after voice service has been established. In this case the messages given to the user are preferably adapted. By means of the messages the user is not left alone with a meaningless sound, but is invited to stay online while the service starts up and is informed about the establishment of the voice service.

A home gateway 30 adapted to implement a method according to the invention is schematically illustrated in Fig. 3. The home gateway 30 supports a networked standby mode, in which its DSL modem 31 is in low power mode without DSL showtime. In addition to the normal circuitry, which for simplicity is not depicted in detail, the home gateway 30 comprises a connector 32 for a telephone 40 and a special power supply unit 33 for providing a supplementary voltage of -48V DC for feeding the phone lines of a connected phone 40. A detection circuit 34 is provided for detecting an unhooking of the phone. The detection circuit 34 is adapted to inform a processor 35 about a detected unhooking.

The processor 35 is configured to service a voice circuit 36 and to launch a showtime request once an unhooking is signaled by the detection circuit 34. Until voice service is established the processors 35 informs the user with messages retrieved from a memory 37 that voice service is being established. Alternatively or in addition, a messaging service module 38 informs the user that voice service is being established by other means, e.g. by displaying a message on a display of the connected phone 40, by reproducing a sound signal via a sound source 41 of the gateway 30, or by illuminating or blinking an LED 42 of the gateway 30. Once voice service is established, a transfer service module 39 transfers the call to the voice mail server. Preferably, the messaging service module 38 and the transfer service module 39 are implemented as software modules executed by the processor 35.

## Claims

1. A gateway (30) adapted to connect to a voice service and comprising a connector (32) for a telephone (40), the gateway (30) comprising:
- a detection circuit (34) configured to determine (20) a user request to make a telephone call; and
- a transfer service module (39) configured to transfer (29) the telephone call to the voice service;
**characterized in that** the gateway (30) further comprises:
- a processor (35) configured to initiate (23) connection to the voice service upon determining (20) a user request to make a telephone call, the processor adapted to focus 100% of its capacity on the voice service when the gateway recovers from a standby state; and
- a messaging service module (36, 38) configured to signal (25) a message to the user that voice service is being connected by the processor (35) until the voice service is established;
wherein the transfer service module (39) is configured to transfer (29) the telephone call to the voice service once the voice service is established and
normal operation is resumed.

2. The gateway (30) according to claim 1, **wherein** the detection circuit (34) detects an unhooking of the telephone (40).

3. The gateway (30) according to claim 1 or 2, **further** comprising a power supply (33) configured to supply a voltage to the connector (32).

4. The gateway (30) according to one of the preceding claims, **wherein** the messaging service module (36, 38) is configured to signal a voice message via the telephone (40), to signal a text message via a display, or to signal a sound signal or a light signal via a sound source (41) or a light source (42) of the gateway (30).

5. The gateway (30) according to one of the preceding claims, **wherein** the messaging service module (36, 38) is configured to signal (28) a further message to the user that voice service has been connected upon connection to the voice service.

6. The gateway (30) according to one of the preceding claims, **wherein** the processor (35) is configured to wake up (22) from a standby state in response to a signal from the detection circuit (34).

7. A method for placing a telephone call via a gateway (30), the method **comprising:**
- determining (20), by a detection circuit (14) of the gateway, a user request to make a telephone call;
- initiating (23), by a processor (35) of the gateway, connection to a voice service;
- the processor (35) focussing 100% of its capacity on the voice service when the gateway recovers from a standby state;
- signaling (25), by a messaging service module (36,38), a message to the user that voice service is being connected until the voice service is established; and
- once the voice service is established, transferring (29), by a transfer service module (39), the telephone call to the voice service and resuming normal operation.

8. The method according to claim 7, **wherein** a user request to make a telephone call is determined (20) by detecting an unhooking of a telephone (40) connected to the gateway (30).

9. The method according to claim 7 or 8, **further** comprising supplying a voltage to a connector (32) for the telephone (40) with a power supply (33).

10. The method according to one of claims 7 to 9, **wherein** the message is signaled (25) to the user as a voice message via the telephone (40), as a text message via a display, or as a sound signal or a light signal via a sound source (41) or a light source (42) of the gateway (30).

11. The method according to one of claims 7 to 10, **wherein** a further message is signaled (28) to the user that voice service has been connected upon connection to the voice service.

12. The method according to one of claims 7 to 11, **further** comprising waking up (22) a processor (35) of the gateway (30) from a standby state in response to determining (20) the user request to make a telephone call.

## Patentansprüche

1. Gateway (30), das dafür ausgelegt ist, sich mit einem Sprachdienst zu verbinden, wobei das Gateway einen Verbinder (32) für ein Telefon (40) umfasst, wobei das Gateway (30) umfasst:
- eine Detektionsschaltung (34), die dafür konfiguriert ist, eine Nutzeranforderung, ein Telefongespräch zu führen, zu bestimmen (20); und
- ein Übertragungsdienstmodul (39), das dafür konfiguriert ist, das Telefongespräch zu dem Sprachdienst zu übertragen (29);
**dadurch gekennzeichnet, dass** das Gateway (30) ferner umfasst:
- einen Prozessor (35), der dafür konfiguriert ist, bei Bestimmung (20) einer Nutzeranforderung, ein Telefongespräch zu führen, eine Verbindung zu dem Sprachdienst zu initiieren (23), wobei der Prozessor dafür ausgelegt ist, 100 % seiner Kapazität auf den Sprachdienst zu konzentrieren, wenn das Gateway aus einem Bereitschaftszustand zurückkehrt; und
- ein Meldungsübermittlungsdienstmodul (36, 38), das dafür konfiguriert ist, an den Nutzer eine Meldung zu signalisieren (25), dass der Sprachdienst durch den Prozessor (35) verbunden wird, bis der Sprachdienst aufgebaut worden ist;
wobei das Übertragungsdienstmodul (39) dafür konfiguriert ist, das Telefongespräch an den Sprachdienst zu übertragen (29), wenn der Sprachdienst aufgebaut worden ist und der normale Betrieb wiederaufgenommen wird.

2. Gateway (30) nach Anspruch 1, **wobei** die Detektionsschaltung (34) ein Abnehmen des Telefons (40) detektiert.

3. Gateway (30) nach Anspruch 1 oder 2, das **ferner** eine Leistungsversorgung (33) umfasst, die dafür konfiguriert ist, dem Verbinder (32) eine Spannung zuzuführen.

4. Gateway (30) nach einem der vorhergehenden Ansprüche, wobei das Meldungsübermittlungsdienstmodul (36, 38) dafür konfiguriert ist, über das Telefon (40) eine Sprachmeldung zu signalisieren, über eine Anzeige eine Textmeldung zu signalisieren oder über eine Schallquelle (41) oder über eine Lichtquelle (42) des Gateways (30) ein Schallsignal oder ein Lichtsignal zu signalisieren.

5. Gateway (30) nach einem der vorhergehenden Ansprüche, **wobei** das Meldungsübermittlungsdienstmodul (36, 38) dafür konfiguriert ist, bei Verbindung mit dem Sprachdienst an den Nutzer eine weitere Meldung zu signalisieren (28), dass der Sprachdienst verbunden worden ist.

6. Gateway (30) nach einem der vorhergehenden Ansprüche, **wobei** der Prozessor (35) dafür konfiguriert ist, als Reaktion auf ein Signal von der Detektionsschaltung (34) aus einem Bereitschaftszustand aufzuwachen (22).

7. Verfahren zum Führen eines Telefongesprächs über ein Gateway (30), wobei das Verfahren **umfasst:**
- Bestimmen (20) einer Nutzeranforderung, ein Telefongespräch zu führen, durch eine Detektionsschaltung (14) des Gateways;
- Initiieren (23) einer Verbindung mit einem Sprachdienst durch einen Prozessor (35) des Gateways;
- wobei der Prozessor (35) 100 % seiner Kapazität auf den Sprachdienst konzentriert, wenn das Gateway aus einem Bereitschaftszustand zurückkehrt;
- Signalisieren (25) einer Meldung an den Nutzer, dass der Sprachdienst verbunden wird, bis der Sprachdienst aufgebaut worden ist, durch ein Meldungsübermittlungsdienstmodul (36, 38); und
- Übertragen (29) des Telefonanrufs an den Sprachdienst und Wiederaufnehmen des normalen Betriebs durch ein Übertragungsdienstmodul (39), wenn der Sprachdienst aufgebaut worden ist.

8. Verfahren nach Anspruch 7, **wobei** eine Nutzeranforderung, ein Telefongespräch zu führen, durch Detektieren eines Abnehmens eines mit dem Gateway (30) verbundenen Telefons (40) bestimmt wird (20).

9. Verfahren nach Anspruch 7 oder 8, das **ferner** das Zuführen einer Spannung zu einem Verbinder (32) für das Telefon (40) mit einer Leistungsversorgung (33) umfasst.

10. Verfahren nach einem der Ansprüche 7 bis 9, **wobei** die Meldung an den Nutzer über das Telefon (40) als eine Sprachmeldung, über eine Anzeige als eine Textmeldung oder über eine Schallquelle (41) oder über eine Lichtquelle (42) des Gateways (30) als ein Schallsignal oder als ein Lichtsignal signalisiert wird (25).

11. Verfahren nach einem der Ansprüche 7 bis 10, **wobei** nach Verbindung mit dem Sprachdienst an den Nutzer eine weitere Meldung signalisiert wird (28), dass der Sprachdienst verbunden worden ist.

12. Verfahren nach einem der Ansprüche 7 bis 11, das **ferner** das Aufwecken (22) eines Prozessors (35) des Gateways (30) aus einem Bereitschaftszustand als Reaktion auf die Bestimmung (20) der Nutzeranforderung, ein Telefongespräch zu führen, umfasst.

## Revendications

1. Passerelle (30) adaptée pour se connecter à un service vocal et comprenant un connecteur (32) pour un téléphone (40), la passerelle (30) comprenant :
- un circuit de détection (34) configuré pour déterminer (20) une demande utilisateur pour passer un appel téléphonique ; et
- un module de service de transfert (39) configuré pour transférer (29) l'appel téléphonique au service vocal ;
**caractérisé en ce que** la passerelle (30) comprend en outre :
- un processeur (35) configuré pour initier (23) la connexion au service vocal après détermination (20) d'une demande utilisateur pour passer un appel téléphonique, le processeur étant adapté pour concentrer 100 % de sa capacité sur le service vocal lorsque la passerelle sort d'un état de veille ;
- un module de service de messages (36, 38) configuré pour envoyer (25) un message à l'utilisateur l'informant que le service vocal est en cours de connexion par le processeur (35) jusqu'à établissement du service vocal ;
où le module de service de transfert (39) est configuré pour transférer (29) l'appel téléphonique au service vocal une fois que le service vocal a été établi et que le fonctionnement normal a repris.

2. Passerelle (30) selon la revendication 1, où le circuit de détection (34) détecte un décrochage du téléphone (40).

3. Passerelle (30) selon la revendication 1 ou 2, comprenant en outre une alimentation (33) configurée pour fournir une tension au connecteur (32).

4. Passerelle (30) selon l'une des revendications précédentes, où le module de service de messages (36, 38) est configuré pour envoyer un message vocal via le téléphone (40), pour afficher un message texte via un écran, ou pour envoyer un signal sonore ou un signal lumineux via une source sonore (41) ou une source lumineuse (42) de la passerelle (30).

5. Passerelle (30) selon l'une des revendications précédentes, où le module de service de messages (36, 38) est configuré pour envoyer (28) un autre message à l'utilisateur l'informant que le service vocal a été connecté après connexion au service vocal.

6. Passerelle (30) selon l'une des revendications précédentes, où le processeur (35) est configuré pour sortir (22) d'un état de veille en réponse à un signal provenant du circuit de détection (34).

7. Procédé pour passer un appel téléphonique via une passerelle (30), le procédé comprenant :
- la détermination (20), par un circuit de détection (14) de la passerelle, d'une demande utilisateur pour passer un appel téléphonique ;
- l'initiation (23), par un processeur (35) de la passerelle, d'une connexion à un service vocal ;
- le processeur (35) concentrant 100 % de sa capacité sur le service vocal lorsque la passerelle sort d'un état de veille ;
- l'envoi (25), par un module de service de messages (36, 38), d'un message à l'utilisateur l'informant que le service vocal est en cours de connexion jusqu'à établissement du service vocal ; et
- une fois le service vocal établi, le transfert (29), par un module de service de transfert (39), de l'appel téléphonique au service vocal et la reprise du fonctionnement normal.

8. Procédé selon la revendication 7, dans lequel une demande utilisateur pour passer un appel téléphonique est déterminée (20) en détectant un décrochage d'un téléphone (40) connecté à la passerelle (30).

9. Procédé selon la revendication 7 ou 8, comprenant en outre la fourniture d'une tension à un connecteur (32) pour le téléphone (40) avec une alimentation (33).

10. Procédé selon l'une des revendications 7 à 9, dans lequel le message est envoyé (25) à l'utilisateur sous forme de message vocal via le téléphone (40), sous forme de message texte via un écran ou sous forme de signal sonore ou de signal lumineux via une source sonore (41) ou une source lumineuse (42) de la passerelle (30).

11. Procédé selon l'une des revendications 7 à 10, où un autre message est envoyé (28) à l'utilisateur l'informant que le service vocal a été connecté après connexion au service vocal.

12. Procédé selon l'une des revendications 7 à 11, comprenant en outre la sortie (22) d'un processeur (35) de la passerelle (30) d'un état de veille en réponse à la détermination (20) de la demande utilisateur pour passer un appel téléphonique.
